# EUROPÄISCHE PATENTSCHRIFT

(11) **EP 2 143 360 B1**
(45) Veröffentlichungstag und Bekanntmachung des Hinweises auf die Patenterteilung: **21.12.2011**
(21) Anmeldenummer: 08160098.3
(22) Anmeldetag: 10.07.2008
(51) Int. Cl.: A47J 31/46

(54) **Kaffeemaschine zum Erzeugen und Ausgeben von Kaffeegetränken, insbesondere Espressokaffeemaschine**
Coffee machine for producing and dispensing coffee drinks, in particular espresso coffee machine
Machine à café destinée à produire et à émettre des boissons à base de café, en particulier machine à café expresso

(43) Veröffentlichungstag der Anmeldung: 13.01.2010
(73) Patentinhaber: Schaerer AG, 4528 Zuchwil (CH)
(72) Erfinder: Lüssi, André, 3303 Jegenstorf (CH)
(74) Vertreter: BOVARD AG

(56) Entgegenhaltungen:
- EP-A- 0 780 079
- WO-A-2005/013781
- WO-A-2006/074170
- WO-A-2007/046702
- DE-U1- 20 217 068

## Beschreibung

Die vorliegende Erfindung bezieht sich auf eine Kaffeemaschine zum Erzeugen und Ausgeben von Kaffeegetränken, insbesondere Espressokaffeemaschine, umfassen mindestens eine Brüheinrichtung mit einer Brühkammer, welche mit Kaffeepulver befüllbar ist und welches Kaffeepulver nach dem Brühvorgang wegführbar ist, mindestens einen Heisswasserboiler, in welchen eine Frischwasserzuführleitung mündet und von welchem eine Heisswasserleitung wegführt, die Heisswasser durch die Brühkammer der Brüheinrichtung führt, und in eine Kaffeeausgabedüse mündet, und eine Steuereinheit, mittels welcher der Kaffeebezug steuerbar ist.

Eine solche Kaffeemaschine ist aus dem Dokument EP 0 780 079 bekannt.

Um mit derartigen Kaffeemaschinen Kaffees beziehen zu können, die eine optimale Qualität aufweisen, müssen Vorkehrungen getroffen werden, um die notwendigen Betriebsbedingungen für die Kaffeemaschine erreichen zu können. Die Heisswasserzuführleitung zur Brühgruppe und die Abgangsleitung von der Brühgruppe für den Kaffee sowie die Brühkammer selbst sollen nach dem Bezug eines Kaffees vollständig entleert werden. Ein gegebenenfalls in den Leitungen und in der Brühkammer verbleibendes Restwasser kühlt rasch ab, was sich auf die Temperatur des danach zu beziehenden Kaffees auswirkt und eine Beeinträchtigung der Qualität zur Folge hat. Es soll zudem auch vermieden werden, dass nach der Beendigung des Kaffeebezugs ein Nachtropfen von Kaffee erfolgen kann, da dies zur Verschmutzung der Kaffeemaschine führt.

Entwässerungssysteme für die Leitungen in Kaffeemaschinen sind in vielfältiger Weise bekannt. Ein derartiges Entwässerungssystem besteht beispielsweise aus einer abwärts gerichteten Entwässerungsleitung, welche über ein schaltbares Ventil mit der Heisswasserleitung verbunden ist. Nach dem Bezug eines Kaffees wird das entsprechende Ventil umgeschaltet, das sich in der Leitung befindliche Restwasser läuft durch die Entwässerungsleitung in ein in der Kaffeemaschine angeordnetes Sammelbecken ab. Der für die Entwässerung erforderliche Unterdruck in der Leitung wird durch die Höhendifferenz zwischen dem Austritt der Entwässerungsleitung und der Brühkammer erhalten. Dieser Unterdruck ist aufgrund relativ geringer Bauhöhe einer Kaffeemaschine jedoch sehr gering, das abfliessende Restwasser fliesst mit kleiner Geschwindigkeit ab, eventuelle sich im Restwasser befindende Kaffeesatzkörner können im entsprechenden Ventil hängen bleiben und die Funktion dieses Ventils beeinträchtigen.

Eine Entwässerung der Leitungen kann auch mittels zusätzlichen Pumpbewegungen des Brühkolbens im Brühzylinder der Brühgruppe vorgenommen werden. Dies hat aber den Nachteil, dass die Dichtungen innerhalb der Brühgruppe einer grösseren Abnützung unterworfen sind, auch die Brühgruppe selbst ist einer grösseren Abnützung ausgesetzt.

Zur Vermeidung des Nachtropfens nach Beendigung der Kaffeeausgabe kann in die Kaffeausgabeleitung ein zusätzliches Ventil eingesetzt werden. Mit diesem Ventil kann die Kaffeeausgabeleitung abgesperrt werden. Dieses Ventil kühlt aber zusätzlich den gebrühten Kaffee ab, was sich negativ auf dessen Qualität auswirkt, zudem kann es rasch verschmutzen und dadurch den Geschmack von der Kaffeemaschine bezogenen Kaffees beeinträchtigen.

Die Aufgabe der vorliegenden Erfindung besteht somit darin, eine Kaffeemaschine zum Erzeugen und Ausgeben von Kaffeegetränken, insbesondere eine Espressokaffeemaschine so auszugestalten, dass nach dem Bezug eines Kaffees die Leitungen in optimaler und einfacher Weise entwässert werden können, ohne dass die vorgängig genannten Nachteile in Kauf genommen werden müssen, und dass dadurch auch eine Nachtropfen verhindert werden kann.

Erfindungsgemäss erfolgt die Lösung dieser Aufgabe dadurch, dass in der Kaffeemaschine eine Luftzuführanleitung angeordnet ist, welche in die Heisswasserleitung mündet und welche an eine Luftquelle angeschlossen ist, in welche Luftzuführleitung ein Sperrventil eingesetzt ist, und dass an der Heisswasserleitung zwischen Heisswasserboiler und Brühkammer eine über ein Ventil ansteuerbare Ablassleitung eingesetzt ist.

Mit dieser erfindungsgemässen Ausgestaltung kann in einfacher und wirkungsvoller Weise nach dem Bezug eines Kaffees das Leitungssystem in der Kaffeemaschine in optimaler Weise vom Restwasser befreit werden, durch das Ausblasen wird auch erreicht, dass gegebenenfalls sich im Leitungssystem sich befindende Kaffesatzpulverkörner ebenfalls wegbefördert werden. Dadurch ist gewährleistet, dass der danach aus der Kaffeemaschine zu beziehende Kaffee eine optimale Qualität aufweist. Mit dieser vollständigen Entleerung des Leitungssystems in der Kaffeemaschine wird zugleich auch das Nachtropfen vermieden, welches nach der Beendigung des Kaffeebezugs erfolgen kann.

In vorteilhafter Weise ist die Luftquelle eine Luftpumpe, wodurch die Kaffeemaschine autonom betrieben werden kann.

Eine Ausführungsvariante der Erfindung ist so ausgestaltet, dass die Luftzuführleitung in einen ersten Teil der Heisswasserleitung mündet, welcher zwischen dem Heisswasserboiler und der Brühkammer angeordnet ist. Dadurch erfolgt zuerst eine Entwässerung der Leitung, die vor der Brühkammer angeordnet ist, das Restwasser wird über die Ablassleitung abgelassen. Danach wird dieser Teil der Leitung durch das Ventil abgesperrt, die Luft wird durch die Brühkammer zur Kaffeeausgabedüse geleitet, wodurch auch dieser Bereich vom Restwasser befreit wird.

Eine weitere Ausführungsvariante der Erfindung ist so ausgestaltet, dass die Luftzuführleitung in einen zweiten Teil der Heisswasserleitung mündet, welcher zwischen der Brühkammer und der Kaffeeausgabedüse angeordnet ist. Damit wird nach dem Bezug eines Kaffees zuerst die Leitung gegen die Ausgabedüse des Kaffees hin entlüftet, dieser Teil wird danach abgesperrt, die Luft wird dann durch die Brühkammer, den ersten Teil der Heisswasserleitung und über das Ventil in die Ablassleitung geleitet, wodurch auch dieser Bereich der Kaffeemaschine von Restwasser befreit wird.

In vorteilhafter Weise ist im ersten Teil der Heisswasserleitung eine Heizeinrichtung für das durchlaufende Wasser angeordnet. Dadurch kann das Brühwasser, das der Brühkammer zugeführt wird, auf die optimale Brühtemperatur gebracht werden.

In vorteilhafter Weise ist der zweite Teil der Heisswasserleitung zwischen der Einmündung der Luftzuführleitung und der Ausgabedüse durch ein Ventil absperrbar, das, wenn der zweite Teil der Heisswasserleitung aus einem elastischen Schlauch gebildet ist, in vorteilhafter Weise als Schlauchquetschventil ausgebildet ist. Dadurch wird dieses Ventil ausserhalb des Heisswasserschlauchs angeordnet, wodurch keine zusätzliche Masse entsteht, die sich abkühlen kann und wodurch der auszugebende gebrühte Kaffee nicht zusätzlich abgekühlt wird.

In vorteilhafter Weise ist in die Ablassleitung ein weiteres Sperrventil eingesetzt, durch welches diese Leitung verschlossen werden kann.

Ausführungsformen der vorliegenden Erfindung werden nachfolgend anhand der beiliegenden Zeichnung beispielhaft näher erläutert.

Es zeigt
Fig. 1 in schematischer Darstellung eine erste Ausführungsform der erfindungsgemässen Ausgestaltung einer Kaffeemaschine;
Fig. 2 in schematischer Darstellung eine weitere Ausführungsform der erfindungsgemässen Ausgestaltung einer Kaffeemaschine; und
Fig. 3 eine Schnittdarstellung durch eine Brüheinrichtung dieser Kaffeemaschine.

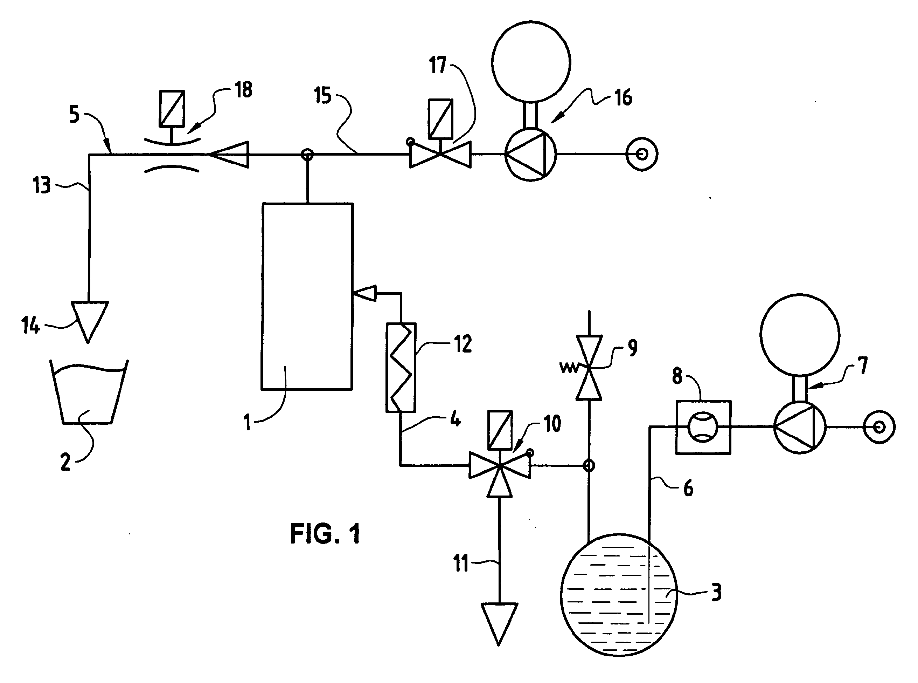

Aus Fig. 1 ist in schematischer Darstellung ein Teil des Aufbaus einer Kaffeemaschine dargestellt. Diese umfasst eine Brüheinrichtung 1, die später noch im Detail beschrieben wird. Dieser Brüheinrichtung 1 wird in bekannter Weise Kaffeepulver und Heisswasser zugeführt, der gebrühte Kaffee wird in eine Tasse 2 ausgegeben. Das für das Brühen eines Kaffees erforderliche Heisswasser stammt aus einem in der Kaffeemaschine angeordneten Heisswasserboiler 3, in welchem das Wasser auf die erforderliche Temperatur gebracht wird, welches beim Bezug eines Kaffees durch den ersten Teil 4 einer Heisswasserleitung 5 der Brüheinrichtung 1 zugeführt wird.

Der Heisswasserboiler wird über eine Frischwasserzuführleitung 6 gespiesen, welche Frischwasserzuführleitung 6 direkt am Wasserleitungsnetz angeschlossen werden kann, diese kann aber auch in einen von Hand befüllbaren Wasserbehälter eingetaucht sein. In die Frischwasserzuführleitung 6 ist eine Wasserpumpe 7 sowie ein Wasserdurchflussmessgerät 8 eingesetzt.

Im Bereich des Heisswasserboilers 3 ist der erste Teil 4 der Heisswasserleitung 5 mit einem Überdruckventil 9 ausgestattet. Ebenfalls in diesem ersten Teil 4 der Heisswasserleitung 5 ist ein erstes Ventil 10 eingesetzt, welches elektromagnetisch schaltbar ist und an welchem die Ablassleitung 11 angebracht ist. Unmittelbar vor dem Eintritt des ersten Teils 4 der Heisswasserleitung 5 in die Brüheinrichtung 1 durchläuft diese einen zusätzlichen Wärmetauscher 12, mit welchem das in die Brüheinrichtung eingeleitete Wasser noch auf die gewünschte Temperatur gebracht werden kann.

Das in der Brüheinrichtung 1 gebrühte Getränk wird über einen zweiten Teil 13 der Heisswasserleitung über eine Kaffeeausgabedüse 14 der Tasse 2 zugeführt.

In den zweiten Teil 13 der Heisswasserleitung 5 mündet eine Luftzuführleitung 15. Diese Luftzuführleitung 15 wird durch eine Luftpumpe 16 gespiesen, welche die Luft aus der Umgebung bezieht. Nach der Luftpumpe 16 ist in der Luftzuführleitung 15 ein Sperrventil 17 eingesetzt. Zwischen der Einmündung der Luftzuführleitung 15 in den zweiten Teil 13 der Heisswasserleitung 5 und der Kaffeeausgabedüse 14 ist ein Ventil 18 eingesetzt, das als Schlauchquetschventil ausgebildet ist. Mit diesem Schlauchquetschventil 18 kann der zweite Teil 13 der Heisswasserleitung 5 verschlossen werden, dieses Schlauchquetschventil 18 hat den Vorteil, dass der Wärmeverlust des diese Leitung durchlaufenden gebrühten Kaffees praktisch vermieden wird, da die Masse des Ventils ausserhalb des Schlauches angeordnet ist und nicht direkt in Kontakt mit dem gebrühten Kaffee kommt.

Zum Bezug eines Kaffees wird die Brühkammer der Brüheinrichtung 1 mit Kaffeepulver gefüllt, die Brühkammer wird durch die Kolben verschlossen, unter die Kaffeeausgabedüse 14 wird eine Tasse 2 gestellt. Über die Wasserpumpe 7 wird dem Heisswasserboiler 3 eine vorbestimmte Wassermenge zugeführt, überwacht durch das Wasserdurchflussmessgerät 8. Das aus dem Heisswasserboiler 3 gelieferte heisse Wasser durchläuft den ersten Teil 4 der Heisswasserleitung 5, das erste Ventil 10 ist entsprechend geschaltet. Im Wärmetauscher 12 wird das Wasser noch auf die entsprechende Brühtemperatur gebracht, bevor dieses in die Brühkammer der Brüheinrichtung 1 eingeleitet wird. In der Brühkammer wird der Kaffee gebrüht, dieser gelangt über den zweiten Teil 13 der Heisswasserleitung 5 in die Kaffeeausgabedüse 14 und von da in die Tasse 2. Das Schlauchquetschventil 18 ist geöffnet, das Sperrventil 17 in der Luftzuführleitung 15 ist verschlossen.

Nach der Beendigung des Kaffeebezugs wird die Luftpumpe 16 aktiviert, das Sperrventil 17 wird sehr kurzzeitig geöffnet, dadurch wird der zweite Teil 13 der Heisswasserleitung 5 und die Kaffeeausgabedüse 14 ausgeblasen, da das Schlauchquetschventil 18 noch geöffnet ist. Dieses wird danach geschlossen, das erste Ventil 10 ist umgeschaltet worden, die Luft gelangt durch die Brühkammer der Brüheinrichtung 1, den ersten Teil 4 der Heisswasserleitung 5 in das erste Ventil 10, von wo sie über die Ablassleitung 11 abgeleitet wird. Danach wird die Zuführung von Luft durch Schliessen des Sperrventils 17 unterbunden.

Mit dieser zugeführten Luft wird zuerst der zweite Teil 13 der Heisswasserleitung 5 ausgeblasen, dieser Teil der Leitung wird somit geleert, danach erfolgt das Ausblasen der Brüheinrichtung und des ersten Teils 4 der Heisswasserleitung 5, jegliches Restwasser und Partikel werden ausgeblasen und durch einen Sammelbehälter aufgefangen, in welchen die Ablassleitung 11 mündet.

Durch diesen Ausblasvorgang wird die Heisswasserleitung 5 und die Brühkammer der Brüheinrichtung 1 vollständig von Restwasser und gegebenenfalls Kaffeesatzkörnern befreit, ein Nachtropfen der Kaffeeausgabedüse 14 wird vermieden, die Kaffeemaschine ist bereit für die Ausgabe eines nächsten Kaffees, die Voraussetzungen für eine optimale Qualität dieses Kaffees sind gewährleistet.

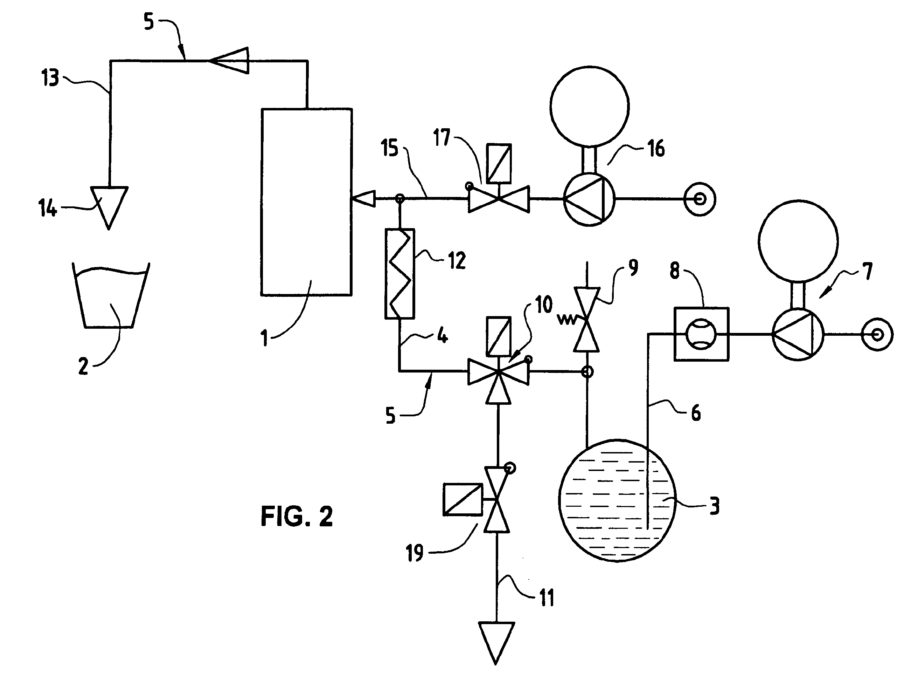

Fig. 2 zeigt in schematischer Darstellung eine zweite Ausführungsform der erfindungsgemässen Ausgestaltung einer Kaffeemaschine. Hierbei werden gleiche Elemente entsprechend der ersten Ausführungsform gemäss Fig. 1 gleich benannt und mit denselben Bezugszeichen versehen. Diese zweite Ausführungsform umfasst wiederum eine Wasserpumpe 7, die über eine Frischwasserzuführleitung 6, in welcher ein Wasserdurchflussmessgerät 8 angeordnet ist, Frischwasser in den Heisswasserboiler 3 pumpt. Über den ersten Teil 4 der Heisswasserleitung 5 gelangt das Wasser in die Brühkammer der Brüheinrichtung 1, wobei in diesem ersten Teil 4 wiederum ein erstes Ventil 10 angeordnet ist, an welchem die Ablassleitung 11 angeschlossen ist. Zudem ist wiederum unmittelbar vor der Brüheinrichtung 1 in diesem ersten Teil 4 der Heisswasserleitung 5 ein Wärmetauscher 12 angebracht. Von der Brühkammer der Brüheinrichtung 1 weg führt der zweite Teil 13 der Heisswasserleitung 5 und mündet in die Kaffeeausgabedüse 14, aus welcher der Kaffee in eine Tasse 2 ausgegeben werden kann.

Bei dieser Ausführungsform mündet die Luftzuführleitung 15 in den ersten Teil 4 der Heisswasserleitung 5, und zwar zwischen dem Wärmetauscher 12 und der Brüheinrichtung 1. Diese Luftzuführleitung 15 wird wiederum durch eine Luftpumpe 16 gespiesen, wobei zwischen Luftpumpe 16 und Mündung der Luftzuführleitung 15 in die Heisswasserleitung 5 ein Sperrventil 17 eingesetzt ist.

Nach dem Bezug eines Kaffees, was in gleicher Weise erfolgt, wie dies zur vorhergehenden Ausführungsform beschrieben worden ist, wird auch hier das Restwasser aus der Heisswasserleitung 5 und der Brühkammer entfernt. Hierzu wird über die Luftpumpe 16 durch die Luftzuführleitung 15 bei kurzzeitig geöffnetem Sperrventil 17 Luft in die Heisswasserleitung 5 eingeführt, das erste Ventil 10 ist umgestellt worden, so dass das Restwasser und gegebenenfalls sich darin befindende Partikel über die Ablassleitung 11 in den Auffangbehälter gelangen. Ein in der Ablassleitung 11 eingesetztes weiteres Sperrventil 19 ist während dieses Vorgangs geöffnet. Durch den Widerstand, der in der Brühkammer der Brüheinrichtung 1 durch den Kaffeesatzpulverkuchen gebildet wird, wird zuerst der erste Teil 4 der Heisswasserleitung ausgeblasen. Danach kann das weitere Sperrventil 19 geschlossen werden, die zugeführte Luft gelangt nun durch die Brühkammer der Brüheinrichtung 1 und den zweiten Teil 13 der Heisswasserleitung 5, wodurch auch dieser Bereich von Restwasser und gegebenenfalls sich darin befindenden Partikel befreit wird. Danach wird das Sperrventil 17 geschlossen, die Luftzuführung wird gestoppt, die Tasse 2 mit dem sich darin befindenden gebrühten Kaffee kann entfernt werden, ein Nachtropfen wird vermieden, der Kaffeesatzpulverkuchen kann aus der Brühkammer der Brüheinrichtung 1 entfernt werden, die Kaffeemaschine ist bereit für den Bezug eines nächsten Kaffees, wobei durch die völlige Befreiung von Restwasser optimale Voraussetzungen für eine perfekte Qualität des neu zu beziehenden Kaffees gesorgt ist.

Wenn das erste Ventil 10 im ersten Teil 4 der Heisswasserleitung 5 so ausgestaltet wird, dass eine zusätzliche Sperrstellung erreicht werden kann, könnte auf das weitere Sperrventil 19 in der Ablassleitung 11 verzichtet werden.

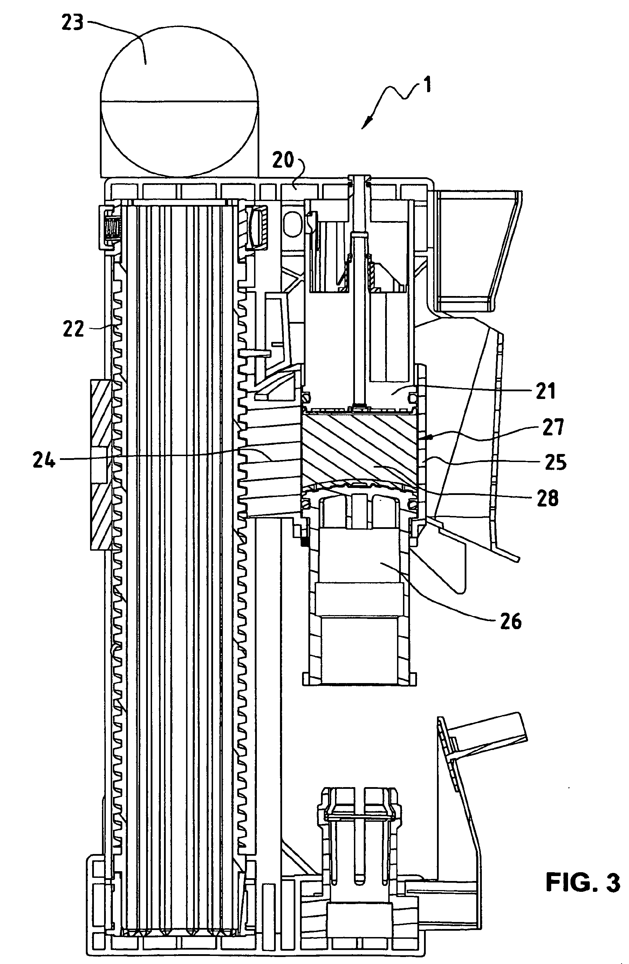

In Fig. 3 ist im Schnitt eine Brüheinrichtung dargestellt, wie sie in der vorgängig beschriebenen Kaffeemaschine eingesetzt werden könnte. Selbstverständlich könnte für die vorgängig beschriebene Kaffeemaschine irgendeine derartige Brüheinrichtung eingesetzt werden.

Die hier dargestellte Brüheinrichtung 1 umfasst einen Rahmen 20, in welchem ein oberer Kolben 21 gehalten ist. Im Rahmen 20 ist eine Spindel 22 drehbar gelagert, angetrieben über einen Elektromotor 23. Mit dieser Spindel 22 ist ein Mitnahmeteil 24 längs dieser Spindel 22 verschiebbar, an diesem Mitnahmeteil 24 befestigt ist ein Brühzylinder 25, der durch einen unteren Kolben 26 verschlossen ist.

Die Brüheinrichtung 1 ist in dieser Fig. 3 in der Brühposition dargestellt, in der verschlossenen Brühkammer 27, die durch den oberen Kolben 21, den Brühzylinder 25 und den unteren Kolben 26 gebildet wird, befindet sich das frisch gemahlene Kaffeepulver 28. Über den unteren Kolben 26 kann durch den ersten Teil 4 der Heisswasserleitung 5 (Fig. 1 und Fig. 2) Heisswasser eingeleitet werden, das Kaffeepulver 28 in der Brühkammer 27 wird gebrüht, der gebrühte Kaffee gelangt über den oberen Kolben 21 in den zweiten Teil 13 der Heisswasserleitung 5 (Fig. 1 und Fig. 2) und wird so in die entsprechende Tasse geleitet. Nach dem Bezug eines Kaffees wird die Brühkammer 27 geöffnet, indem der Brühzylinder 25 und der untere Kolben 26 durch Verdrehen der Spindel 22 nach unten verfahren wird, der Kaffeesatzkuchen wird ausgeworfen. Die Brühkammer kann danach für den Bezug eines weiteren Kaffees wieder mit Kaffeepulver gefüllt werden. Eine genaue Funktionsbeschreibung einer derartigen Brüheinrichtung 1 kann beispielsweise der europäischen Patentschrift Nr. 0 526 407 entnommen werden.

Mit dieser erfindungsgemässen Ausgestaltung einer Kaffeemaschine kann das Leitungssystem und die Brühkammer in einfacher Weise und sehr effizient nach dem Bezug eines Kaffees von Restwasser und gegebenenfalls Kaffeesatzpartikel befreit werden, wodurch auch ein Nachtropfen dieser Kaffeemaschine vermieden werden kann. Durch diesen Vorgang werden optimale Voraussetzungen geschaffen, um einen neu zu beziehenden Kaffee mit optimaler Qualität erhalten zu können.

## Patentansprüche

1. Kaffeemaschine zum Erzeugen und Ausgeben von Kaffeegetränken, insbesondere Espressokaffeemaschine, umfassend mindestens eine Brüheinrichtung (1) mit einer Brühkammer (27), welche mit Kaffeepulver befüllbar ist und welches Kaffeepulver nach dem Brühvorgang wegführbar ist, mindestens einen Heisswasserboiler (3), in welchen eine Frischwasserzuführleitung (6) mündet und von welchem eine Heisswasserleitung (5) wegführt, die Heisswasser durch die Brühkammer (27) der Brüheinrichtung (1) führt und in eine Kaffeeausgabedüse (14) mündet, wobei an der Heisswasserleitung (5) zwischen Heisswasserboiler (3) und Brühkammer (27) eine über ein Ventil (10) ansteuerbare Ablassleitung (11) eingesetzt ist, und eine Steuereinheit, mittels welcher der Kaffeebezug steuerbar ist, **dadurch gekennzeichnet, dass** in der Kaffeemaschine eine Luftzuführleitung (15) angeordnet ist, welche in die Heisswasserleitung (5) mündet und welche an eine Luftquelle angeschlossen ist, in welche Luftzuführleitung (15) ein Sperrventil (17) eingesetzt ist.

2. Kaffeemaschine nach Anspruch 1, **dadurch gekennzeichnet, dass** die Luftquelle eine Luftpumpe (16) ist.

3. Kaffeemaschine nach Anspruch 1 oder 2, **dadurch gekennzeichnet, dass** die Luftzuführleitung (15) in einen ersten Teil (4) der Heisswasserleitung (5) mündet, welcher zwischen dem Heisswasserboiler (3) und der Brühkammer (27) angeordnet ist.

4. Kaffeemaschine nach Anspruch 1 oder 2, **dadurch gekennzeichnet, dass** die Luftzuführleitung (15) in einen zweiten Teil (13) der Heisswasserleitung (5) mündet, welcher zwischen der Brühkammer (27) und der Kaffeeausgabedüse (14) angeordnet ist.

5. Kaffeemaschine nach Anspruch 3 oder 4, **dadurch gekennzeichnet, dass** im ersten Teil (4) der Heisswasserleitung (5) eine Heizeinrichtung (12) für das durchlaufende Wasser angeordnet ist.

6. Kaffeemaschine nach Anspruch 4 oder 5, **dadurch gekennzeichnet, dass** der zweite Teil (13) der Heisswasserleitung (5) zwischen der Einmündung der Luftzuführleitung (15) und der Ausgabedüse (14) durch ein Ventil (18) absperrbar ist.

7. Kaffeemaschine nach einem der Ansprüche 4 bis 6, **dadurch gekennzeichnet, dass** mindestens der zweite Teil (13) der Heisswasserleitung (5) aus einem elastischen Schlauch gebildet ist und dass das Ventil (18) als Schlauchquetschventil ausgebildet ist.

8. Kaffeemaschine nach einem der Ansprüche 1 bis 7, **dadurch gekennzeichnet, dass** in die Ablassleitung (11) ein weiteres Sperrventil (19) eingesetzt ist.

## Claims

1. Coffee machine for producing and dispensing of coffee beverages, in particular an espresso coffee machine, comprising at least one brewing device (1) with a brewing chamber (27), which is fillable with ground coffee and which ground coffee is able to be guided away after the brewing step, at least one hot water boiler (3), into which a fresh water supply line (6) comes out and from which a hot water line (5) leads away, which line guides hot water through the brewing chamber (27) of the brewing device (1) and comes out into a coffee dispensing nozzle (14), a drain line (11) being attached to the hot water line (5) between hot water boiler (3) and brewing chamber (27), which drain line is controllable via a valve (10), and a control unit, by means of which the dispensing of coffee is controllable, **characterised in that** disposed in the coffee machine is an air supply line (15), which comes out into the hot water line (5) and which is connected to an air source, in which air supply line (15) a stop valve (17) is installed.

2. Coffee machine according to claim 1, **characterised in that** the air source is an air pump (16).

3. Coffee machine according to claim 1 or 2, **characterised in that** the air supply line (15) comes out into a first part (4) of the hot water line (5), which part is disposed between the hot water boiler (3) and the brewing chamber (27).

4. Coffee machine according to claim 1 or 2, **characterised in that** the air supply line (15) comes out into a second part (13) of the hot water line (5), which part is disposed between the brewing chamber (27) and the coffee dispensing nozzle (14).

5. Coffee machine according to claim 3 or 4, **characterised in that** disposed in the first part (4) of the hot water line (5) is a heating device (12) for the water passing through.

6. Coffee machine according to claim 4 or 5, **characterised in that** the second part (13) of the hot water line (5) is blockable by a valve (18) between the junction of the air supply line (15) and the dispensing nozzle (14).

7. Coffee machine according to one of the claims 4 to 6, **characterised in that** at least the second part (13) of the hot water line (5) is made up of a flexible elastic hose and **in that** the valve (18) is designed as a hose pinch valve.

8. Coffee machine according to one of the .claims 1 to 7, **characterised in that** installed in the drain line (11) is a further stop valve (19).

## Revendications

1. Machine à café destinée à la production et la distribution de boissons à base de café, en particulier machine à café espresso, comprenant au moins un dispositif d'infusion (1) avec une chambre d'infusion (27) qui est remplissable avec du café moulu, et la poudre de café moulu est susceptible d'être écartée après l'étape d'infusion, au moins une bouilloire d'eau chaude (3) dans laquelle débouche une conduite d'alimentation en eau fraîche (6) et depuis laquelle s'écarte une conduite d'eau chaude (5) qui amène de l'eau chaude au travers de la chambre d'infusion (27) du dispositif d'infusion (1) et débouche dans une buse de prélèvement de café (14), avec une conduite d'évacuation (11) attachée à la conduite d'eau chaude (5) entre la bouilloire d'eau chaude (3) et la chambre d'infusion (27), et susceptible d'être commandée par une soupape (10), et une unité de commande au moyen de laquelle le prélèvement de café peut être commandé, **caractérisé**é en ce que dans la machine à café est agencée une conduite d'alimentation en air (15) qui débouche dans la conduite d'eau chaude (5) et qui est reliée à une source d'air, et dans la conduite d'alimentation en air (15) une soupape d'arrêt (17) est installée.

2. Machine à café selon la revendication 1, **caractérisé**é en ce que la source d'air est une pompe à air (16).

3. Machine à café selon la revendication 1 ou 2, **caractérisé**é en ce que la conduite d'alimentation en air (15) débouche dans une première partie (4) de la conduite d'eau chaude (5), et laquelle partie est agencée entre la bouilloire d'eau chaude (3) et la chambre d'infusion (27).

4. Machine à café selon la revendication 1 ou 2, **caractérisé**é en ce que la conduite d'alimentation en air (15) débouche dans une seconde partie (13) de la conduite d'eau chaude (5), et laquelle partie est agencée entre la chambre d'infusion (27) et la buse de prélèvement de café (14).

5. Machine à café selon la revendication 3 ou 4, **caractérisé**é en ce que dans la première partie (4) de la conduite d'eau chaude (5), il est agencé un dispositif de chauffage (12) pour l'eau y passant.

6. Machine à café selon la revendication 4 ou 5, **caractérisé**é en ce que la seconde partie (13) de la conduite d'eau chaude (5) est susceptible d'être bloquée par une soupape (18) entre l'embouchure de la conduite d'alimentation en air (15) et la buse de prélèvement (14).

7. Machine à café selon l'une des revendications 4 à 6, **caractérisé**é en ce qu'au moins la seconde partie (13) de la conduite d'eau chaude (5) est constituée d'un tuyau souple élastique et en ce que la soupape (18) est réalisée en tant que vanne à pincement.

8. Machine à café selon l'une des revendications 1 à 7, **caractérisé**é en ce que dans la conduite d'évacuation (11), une soupape d'arrêt supplémentaire (19) est installée.
